# EUROPEAN PATENT APPLICATION

(11) **EP 1 916 832 A1**
(43) Date of publication of application: **30.04.2008**
(21) Application number: 06775217.0
(22) Date of filing: 26.07.2006
(51) Int. Cl.: H04M 3/42

(54) **A METHOD AND SYSTEM FOR PROMPTING THE ROAMING STATE OF THE CALLED USER**

(30) Priority: 15.08.2005 CN 200510090468
(71) Applicant: Huawei Technologies Co., Ltd., Longgang District, Shenzhen Guangdong 518129 (CN)
(72) Inventor: WANG, Bingfu, Shenzhen, Guangdong 518129 (CN); ZHANG, Shaobo, Shenzhen, Guangdong 518129 (CN)
(74) Representative: Viering, Jentschura & Partner
(86) International application number: PCT/CN2006/001849
(87) International publication number: WO 2007/019773

(57) **Abstract**

A method and system for prompting the roaming state of the called user. The method comprises: the calling user(211) initiates a call to the called user towards the network side(201); after receiving the call request(202), when the network side determines that the called user is roaming(203,204), then it obtains the roaming state information(205,206), and prompts it to the calling user(207). The system of the invention comprises: GMSC and roaming identification device(212); when the said GMSC receives the call request, the roaming identification device(212) judges the current state of the called user, and when it determines that the called user is roaming, obtains the roaming state information of the called user, and prompts it to the calling user. The method and system of the invention avoids that the calling user(211) initiates a call at inappropriate time, or initiates some unimportant call, thus saves the call fee of the called user. Moreover, the network side uses the roaming state information to process the call, thus optimizes the call.

## Description

### Field of the Invention

The present invention relates to the field of mobile communication, and more particularly to a method and system for prompting a roaming state of a called subscriber.

### Background of the Invention

In a mobile communication system, each subscriber is associated with a home area. When being served in areas other than this home area, the subscriber is roaming. The existing mobile communication systems provide a roaming capability to enable subscribers to communicate with other subscribers, including answering calls from the other subscribers when roaming outside their home areas.

However, when a call is initiated to a roaming subscriber, a problem may arise: for instance, if a time difference between the location of the calling party and that of the called subscriber is considerable, for example, it is daytime for the calling party but midnight for the called party, it is inconvenient for the communication between the two parties.

In a conventional calling procedure, information such as whether the called subscriber is in the roaming state and the local time of the location of the called subscriber is invisible to the calling party. Consequently, it is possible for the calling party to initiate an unnecessary call to the called subscriber at an inappropriate time. As a result, the called subscriber in the roaming state has to answer an incoming call initiated at an inappropriate time or being unnecessary, and also has to suffer expensive fee of the roaming call.

### Summary of the Invention

In view of this, a primary object of the present invention is to provide a method and a system for prompting a roaming state of a called subscriber, so that a calling party can obtain roaming state information of the called subscriber when initiating a call and then determine whether to proceed with or terminate the call according to the information.

To achieve this object, the present invention provides technical solutions as follows.

A method for prompting a roaming state of a called subscriber is provided. The method includes: initiating, by a calling party, to a network side a call for calling the called subscriber; determining, by the network side, a current state of the called subscriber upon receipt of the call request; and obtaining, by the network side, roaming state information of the called subscriber and prompting, by the network side, the calling party when determining that the called subscriber is in the roaming state.

The obtaining the roaming state information of the called subscriber and prompting the calling party includes: determining a roaming area of the called subscriber, and disposing location description information of the roaming area in the roaming state information and sending the roaming state information to the calling party.

The determining the roaming area of the called subscriber includes: obtaining a location area identification or a network device identification of a network device currently serving the called subscriber; and positioning the roaming area of the called subscriber according to the location area identification or the network device identification.

One or more privacy disclosure levels are configured, each privacy disclosure level corresponds to a right for obtaining the location description information, and the higher the privacy disclosure level is, the more detailed the obtained location description information is; and the privacy disclosure levels are assigned to individual calling parties respectively; and the method further includes: obtaining the location description information of the roaming area of the called subscriber at a corresponding right according to the privacy disclosure level of the calling party initiating the call, and sending the location description information to the calling party.

The obtaining the roaming state information of the called subscriber and prompting the calling party further includes: determining a local time of the roaming area of the called subscriber, and disposing the local time in the roaming state information to send the roaming state information to the calling party.

A system for prompting a roaming state of a called subscriber is provided. The system includes a gateway mobile switching center connected to the subscriber. The system further includes: a roaming identifying device adapted to store roaming state information of the called subscriber. The roaming identifying device is further adapted to determine a current state of the called subscriber when the gateway mobile switching center receives a call request, and to obtain the roaming state information of the called subscriber and prompt a calling party when determining that the called subscriber is in the roaming state.

The roaming identifying device includes: a subscriber database adapted to store subscriber home area attributes and subscriber privacy management information; a roaming location information database adapted to store location description information of roaming areas; and a roaming information server connected to the subscriber database, the roaming location database and the gateway mobile switching center, and adapted to obtain the roaming state information of the called subscriber through searching the subscriber database and the roaming location database and provide the roaming state information to the gateway mobile switching center.

The roaming identifying device includes: a subscriber database adapted to store subscriber home area attributes and subscriber privacy management information; a roaming location information database adapted to store location description information of roaming areas; and a service control point storing a roaming prompting service logic for the called subscriber, adapted to control the gateway mobile switching center when a roaming prompting service is triggered and performed in the gateway mobile switching center and obtain the roaming state information of the called subscriber through searching the subscriber database and the roaming location database and provide the roaming state information to the gateway mobile switching center.

It is seen that in the inventive method and system for prompting the roaming state of the called subscriber, after the calling party initiates a call, the roaming state information of the called subscriber such as the standard time difference of the roaming area of the called subscriber is sent to the calling party by the network side, allowing the calling party to learn the current state of the called subscriber timely and to determine whether to proceed with or terminate the call according to the information. Therefore, according to the method of the present invention, the situation that the calling party initiates a call at an inappropriate time may be avoided, or the calling party may be allowed to abandon some unnecessary calls when learning that the called subscriber is in the roaming state, so as to save communication fee of the called subscriber. Furthermore, after obtaining the information, the network side may directly process the call according to the roaming state information, for example, reject or automatically answer the call, and inform the calling party the result, so as to optimize the calling procedure.

### Brief Description of the Drawings

Figure 1 is a structure diagram illustrating a network for prompting a roaming state of a called subscriber according to an exemplary embodiment of the present invention;

Figure 2 is a flow chart for implementing prompting of a roaming state of a called subscriber according to an exemplary embodiment of the present invention;

Figure 3 is a structure diagram illustrating a network for prompting a roaming state of a called subscriber according to another exemplary embodiment of the present invention; and

Figure 4 is a flow chart for implementing prompting of a roaming state of a called subscriber according to another exemplary embodiment of the present invention.

### Detailed Description of the Embodiments

The present invention is detailed in conjunction with the following embodiments and accompanying drawings to make the object, solutions and advantages of the present invention understood more apparently.

In the present invention, a calling party initiates a call to a mobile subscriber. Upon receipt of the call request, the network side determines a current state of the called subscriber, and provides roaming state information of the called subscriber to the calling party when determining that the called subscriber is in the roaming state. The calling party may determine whether to proceed with the call or not.

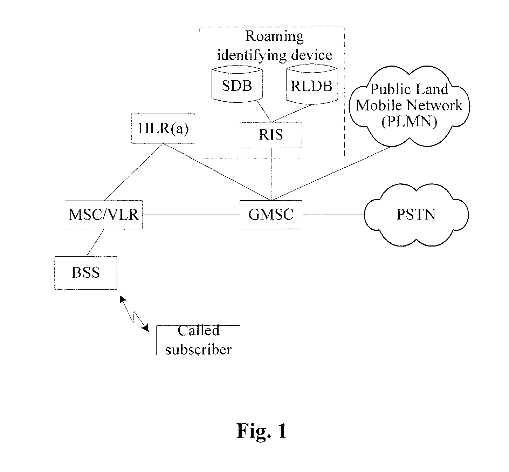

Figure 1 shows a structure diagram of a network for prompting a roaming state of a called subscriber according to an exemplary embodiment of the present invention. Only the network entities closely related to the implementation of the present invention are shown in Figure 1. Specifically, the network entities include a Mobile Switching Center (MSC), a Gateway Mobile Switching Center (GMSC), a Home Location Register (HLR), a Visitor Location Register (VLR), a Subscriber DataBase (SDB), a Roaming Location DataBase (RLDB) and a Roaming Information Server (RIS).

The mobile switching center is adapted to provide call control to the mobile subscribers within its serving area. The MSC currently serving a mobile subscriber is referred to as a Visited Mobile Switching Center (VMSC) for the subscriber.

The gateway mobile switching center is adapted to perform route querying and switching. After finding out the VMSC serving the called subscriber, the gateway mobile switching center routes the call to the VMSC.

The home location register is adapted to store data of mobile subscribers, such as subscription information. The visitor location register is adapted to temporarily store the data of the mobile subscribers moving into its serving area. The HLR together with the VLR and the MSC performs subscribers' mobility management function. Usually, the MSC and the VLR may be integrated into the same physical entity which is indicated as MSC/VLR.

Data records for the mobile subscribers subscribed to "roaming prompting service" are stored in the subscriber database, which includes subscriber home area attributes and subscriber privacy management information.

The subscriber home area attributes include home area information of a mobile subscriber. The home area information may be represented as a set of identifications of MSCs serving the home area, or a set of Location Areas (LAs) making up the home area (serving area of a MSC may consist of one or more location areas), or a set of identifications of VLRs serving the home area. The subscriber home area attributes may also include a standard time difference with Greenwich as reference location (e.g. the standard time difference of Beijing is eight hours), and/or time zone of the home area of the subscriber.

The subscriber privacy management information includes a correspondence relationship between one or more privacy disclosure levels and calling party numbers. This information is generated upon the subscription of a mobile subscriber to the "roaming prompting service" and may be modified upon the mobile subscriber's request.

Table 1 shows an example of data record of a mobile subscriber (with a number as N0) stored in the subscriber database.

**Table 1**

| Subscriber number | | N0 | |
|---|---|---|---|
| Subscriber home area attributes | Home area information | MSC-1 MSC-2 MSC-3 | |
| | | LA-1 LA-2 LA-3 LA-4 LA-5 | |
| | | VLR-1 VLR-2 VLR-3 | |
| | Standard time difference of home area | +8 | |
| Subscriber privacy management information | | Privacy disclosure level | Calling party number |
| | | 1 | N1 N2 |
| | | 2 | N3 N4 N5 |
| | | 3 | N7 N8 |
| | | 4 | Others |

In practice, the subscriber privacy management information is used to protect the privacy of the mobile subscriber when being called. This information is combined with the data records stored in the roaming location database to enable the location description information with different levels of detail is prompted depending on the calling party number.

The roaming location database is adapted to store a correspondence relationship between location description information of roaming areas and privacy disclosure levels. The location description information includes contents such as country, province/state, city and time zone. For each area, the location description information is fixed. If the area where a subscriber is located is represented with a device identification of an MSC currently serving the subscriber, the location description information of the area identified as MSC-ID3 is Britain/England/Landon/0.

Table 2 shows multiple pieces of data records in the roaming location database. It can be seen from Table 2 that different privacy disclosure levels allow different contents to be obtained. For instance, for the location description information of MSC-ID1, only the country information may be obtained at privacy disclosure level 1 while all the country, province/state and city information may be obtained at privacy disclosure level 3.

**Table 2**

| Area identification | Privacy disclosure level 1 (country) | Privacy disclosure level 2 (province/state) | Privacy disclosure level 3 (city) | Privacy disclosure level 4 (standard time difference/time zone) |
|---|---|---|---|---|
| MSC-ID1 | China | Guangdong | Shenzhen | + 8 |
| MSC-ID3 | Britain | England | Landon | 0 |
| MSC-ID5 | United States | California | San Francisco | - 8 |

The roaming information server is adapted to connect with the SDB, the RLDB and the GMSC, and to search the SDB and the RLDB upon a request from the GMSC to obtain roaming state information of a called subscriber. Furthermore, the roaming information server is adapted to obtain roaming state information of a called subscriber in different levels of detail according to the called party number and the calling party number and to provide the roaming state information to the GMSC. The roaming state information may include roaming flag (for indicating whether the called subscriber is roaming), roaming area and local time of the roaming area.

The RIS, the SDB and the RLDB are new function entities introduced on the basis of the conventional network, and adapted to support the roaming prompting service. Accordingly the three function entities are also collectively referred to as a roaming identifying device. These three function entities may be disposed separately or on the same physical entity such as the GMSC. The GMSC, the HLR, the RIS, the SDB and the RLDB are located in the home area of a mobile subscriber while the VMSC is located in the roaming area where the mobile subscriber is.

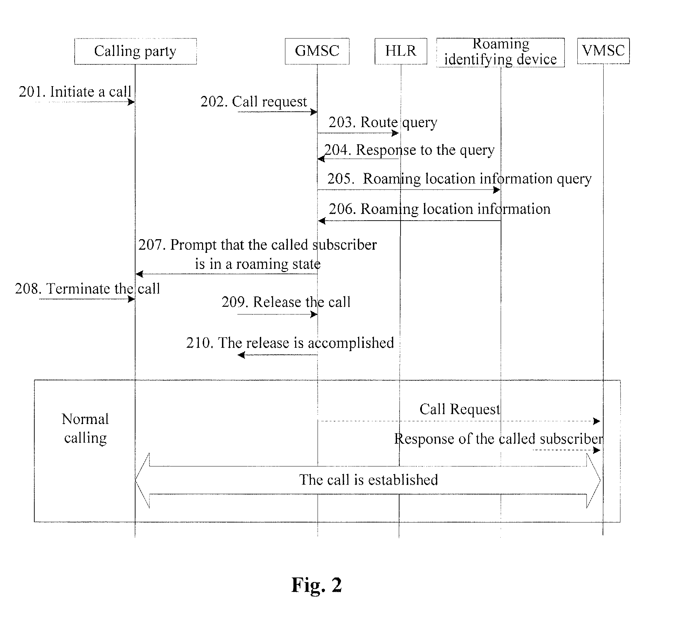

On the basis of the network structure as shown in Figure 1, the GMSC initiates to determine the current state of the called subscriber upon receipt of a call request from the calling party. When it is determined that the called subscriber is roaming, the roaming state information of the called subscriber is obtained according to a Mobile Station Roaming Number (MSRN) of the called subscriber. Then the roaming state information is sent to the calling party by the GMSC. The calling party determines whether to proceed with or terminate the call according to the roaming state information of the called subscriber. In this way, the method can optimize the calling procedure and decrease the waste due to resource occupying. Figure 2 shows a procedure for implementing prompting of a roaming state of a called subscriber by using the network shown in Figure 1, according to an exemplary embodiment of the present invention. Specifically, the procedure includes the steps as follows.

In steps 201 to 202, a calling party initiates a call, and the call is routed to the GMSC.

In steps 203 to 204, the GMSC queries the HLR of a called subscriber for call routing according to a called party number carried in the call request, and obtains from the HLR route information of the VMSC currently serving the called subscriber. The route information includes an MSRN assigned by the VMSC to the called subscriber.

In step 205, the GMSC queries the RIS of the roaming state information of the called party. The query request carries par ameters as: the calling party number, the called party number and the MSRN of the called subscriber.

In step 206, upon receipt of the query of the roaming state information of the called party, the RIS searches the SDB and the RLDB according to the called party number, the calling party number and the MSRN of the called subscriber to obtain the roaming state information of the called subscriber, and sends the roaming state information to the GMSC.

This step specifically includes:

1) The RIS searches the SDB according to the called party number and the calling party number, to obtain the home area attributes of the called subscriber and the privacy disclosure level for the calling party.

2) The RIS derives an MSC identification from the MSRN to obtain the location description information of the roaming area of the called subscriber.

As specified conventionally, the MSRN is a temporary number and is directed to an MSC serving the called subscriber, and thus the MSC identification may be derived from the first some digits of the MSRN. For instance, according to the numbering plan of China Mobile Communication Corporation, an MSRN of 8613901220135 corresponds to an MSC identification of 8613901220. Then the RIS compares the current location and the home area of the called subscriber to determine whether the current location is within the home area of the called subscriber. If the MSC identification of the current location belongs to the set of MSC identifications which define the home area, it shows that the called subscriber is in the home area and no roaming occurs; otherwise, it shows that the called subscriber is in a roaming state.

When determining that the called subscriber is in the roaming state, the RIS further searches the RLDB according to the MSC identification. A correspondence relationship between the MSC identifications and the location description information for respective roaming areas represented by the MSC identifications is recorded in the RLDB.

3) The RIS obtains the location description information at a corresponding right according to the privacy disclosure level for the calling party and provides the obtained location description information to the calling party.

In this step 206, the local time of the roaming area of the called subscriber may be calculated using standard time difference and/or time zone of the home area of the called subscriber, local time of the home area of the called subscriber and a standard time difference and/or time zone of the roaming area of the called subscriber. The standard time difference and/or time zone of the home area of the called subscriber are/is stored in the SDB and may be obtained through querying the SDB. It may be understood that the local time of the roaming area of the called subscriber may be obtained through directly querying the VMSC of the roaming area of the called subscriber by the GMSC.

In step 207, the GMSC prompts the calling party of the roaming of the called subscriber by notifying the calling party of the called subscriber's roaming state information. The prompting of the roaming of the called subscriber may be implemented in various manners, such as with a voice prompt, a message prompt or a signaling notification.

In steps 208 to 210, after receiving the prompt indicating that the called subscriber is roaming, if the calling party chooses to abandon the call, the GMSC terminates the call.

It may be understood that if the calling party does not abandon the call, the GMSC will proceed to establish the call. Specifically, the GMSC initiates a call request to the VMSC by means of the MSRN of the called subscriber to route the call to the VMSC; the VMSC initiates a paging message to the called subscriber via a base station system, and the called subscriber responds to the call, thus establishing the communication between the calling and called parties.

In practical implementation the above procedure, if the time for searching for the roaming state information and prompting the subscriber is too long, the MSRN may be invalidated. Consequently, the call can't be accomplished even if the calling party tends to proceed with the call. For this case, the MSC can re-perform the route querying after the calling party determines to proceed with the call, so as to obtain a new roaming number of the called subscriber, and perform the subsequent call establishment with the new roaming number.

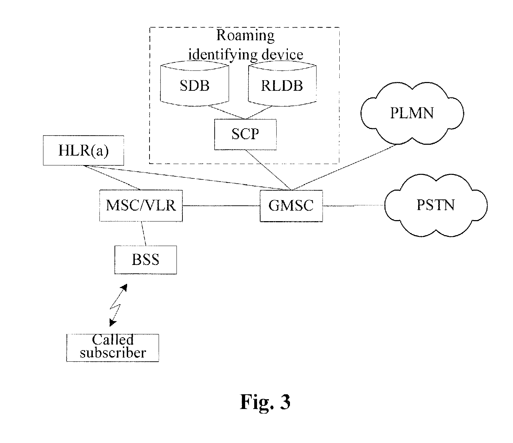

Figure 3 is a structure diagram illustrating a network for prompting a roaming state of a called subscriber according to another exemplary embodiment of the present invention. This network is implemented on the basis of a conventional intelligent network, and includes a GMSC, a VMSC, a VLR, an HLR, an SDB, an RLDB and a Service Control Point (SCP). The SDB, the RLDB and the SCP are collectively referred to as a roaming identifying device, and the SDB and the RLDB are managed by the SCP. In a specific implementation, the SDB and the RLDB may be disposed in the SCP as a module of the SCP.

It should be noted that after the called subscriber subscribes to the "roaming prompting service" in advance, the corresponding intelligent service subscription information is stored in the HLR connected to the MSC of the called subscriber. When the call reaches the GMSC, the GMSC queries the HLR of the called subscriber for routing, and the HLR sends to the GMSC the information relevant to the called subscriber stored in the HLR. The information includes the intelligent service subscription information and the current location of the called subscriber, and the current location of the called subscriber may be represented with an MSC identification or a location area identification. Then the GMSC triggers the intelligent service according to the intelligent service subscription information, and implements the "roaming prompting service" subscribed to by the called subscriber under the control of the SCP.

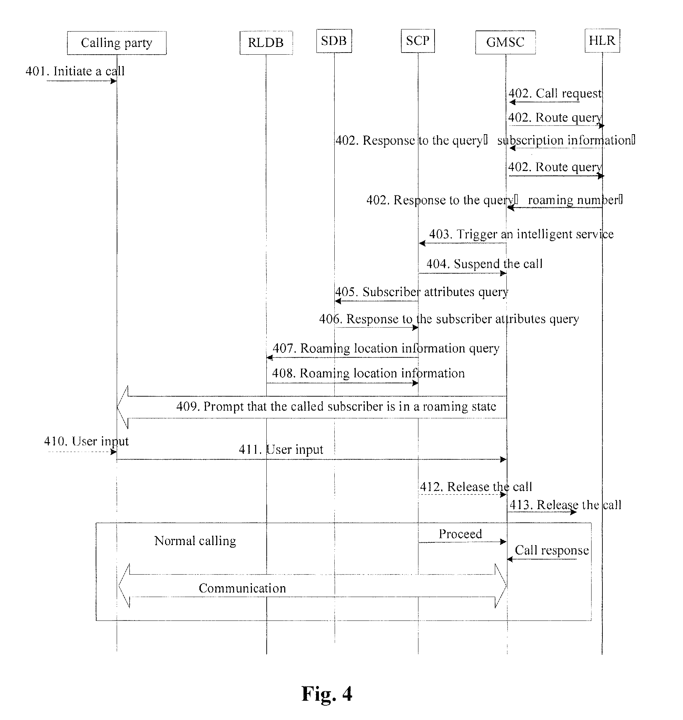

On the basis of the network structure as shown in Figure 3, Figure 4 shows a procedure for implementing prompting of a roaming state of a called subscriber according to another embodiment of the present invention. Specifically, the procedure includes the steps as follows.

In steps 401 to 402, a calling party initiates a call request to a mobile subscriber who has subscribed to the "roaming prompting service", and the call request is sent to the GMSC.

In step 403, the GMSC sends a route query request to the HLR of the called subscriber, and the HLR sends the intelligence service subscription information and the current location of the called subscriber to the GMSC.

In step 404, the GMSC triggers the intelligence service according to the intelligent service subscription information, and then sends to the SCP the related information of the two parties. The related information includes the current location of the called subscriber. Then the GMSC suspends the call and waits for instructions from the SCP.

In steps 405 to 408, the SCP determines the current state of the called subscriber according to the current location of the called subscriber in conjunction with the subscriber home area attributes of the called subscriber, and obtains the location description information of the roaming area of the called subscriber and provides the location description information to the calling party after determining that the called subscriber is in a roaming state.

Specifically, the SCP searches the SDB to obtain the home area information of the called subscriber, and compares this home area with the current location of the called subscriber to determine whether the called subscriber is in the roaming state, i.e. whether the called subscriber is located inside or outside the home area. When the called subscriber is outside the home area, the SCP searches the RLDB according to the current location of the called subscriber to obtain the location description information of the roaming area of the called subscriber, and selects and sends the information contents corresponding to the privacy disclosure level of the calling party to the calling party for prompting.

Furthermore, the SCP obtains the standard time difference and/or time zone of the home area of the called subscriber through searching the SDB, and obtains the standard time difference and/or time zone of the roaming area from the RLDB, and then calculates out the local time of the roaming area in conjunction with the local time of the home area of the called subscriber. Then the SCP determines whether the local time of the roaming area is within a call barring time period pre-specified by the called subscriber. If the local time of the roaming area is within the call barring time period, the SCP sends a prompt to the calling party; otherwise, the call is proceeded. The called subscriber may specify multiple call barring time periods, for example, specifying the sleeping time as a call barring time period, and specify corresponding prompt information for each of the call barring time periods, so as to prompt the calling party of different contents in different call barring time periods.

In step 409, the SCP waits for a response from the calling party to determine whether to proceed with the call.

In steps 410 to 413, upon receipt of the response from the calling party, the SCP performs a subsequent processing according to the response. If the response says "Abandon the Call", the SCP instructs the GMSC to terminate the call. If the response says "Proceed with the Call", the subsequent procedure is the same as that in the prior art. In other words, the SCP instructs the GMSC to proceed with the call establishment between the calling party and the called subscriber.

In the above procedure, after obtaining the roaming state information of the called subscriber, the SCP may also, according to the roaming state information, directly control the GMSC to process the call, and notify the calling party of the processing result without waiting for the response from the calling party. This step is not repeated herein. For example, the SCP directly controls the GMSC to terminate the call and to prompt the calling party when determining that the local time is within the call barring time period.

The above specific embodiments of the present invention are described, and appropriate modification may be made in practical application. For example, the step of determining the current state of the called subscriber may also be performed by the GMSC, but not limited to by the RIS or SCP. For another example, the roaming state information of the called subscriber may be obtained in conjunction with a conventional location system including satellite positioning system and the system utilizing cell positioning technology.

It can be seen from the above embodiments that in the inventive method and system for prompting the roaming state of the called subscriber, when a call is initiated by a calling party, roaming state information of a called subscriber is sent by the network side to the calling party, so as to allow the calling party to determine whether to proceed with or terminate the call according to the roaming state information. Therefore, according to the method, the situation that the calling party initiates a call at an inappropriate time or initiates some unnecessary calls may be avoided, thus saving the communication fee for the called subscriber. Furthermore, the network side may directly process the call (e.g., reject the call or answer the call) by using the roaming state information and notify the calling party of the processing result, thus optimizing the calling procedure.

## Claims

1. A method for prompting a roaming state of a called subscriber, comprising:
initiating, by a calling party, to a network side a call for calling the called subscriber;
determining, by the network side, a current state of the called subscriber upon receipt of the call request; and
obtaining, by the network side, roaming state information of the called subscriber and prompting, by the network side, the calling party when determining that the called subscriber is in the roaming state.

2. The method according to claim 1, wherein the obtaining the roaming state information of the called subscriber and prompting the calling party comprises:
determining a roaming area of the called subscriber; and
disposing location description information of the roaming area in the roaming state information and sending the roaming state information to the calling party.

3. The method according to claim 2, wherein the determining the roaming area of the called subscriber comprises:
obtaining a location area identification or a network device identification of a network device currently serving the called subscriber; and
positioning the roaming area of the called subscriber according to the location area identification or the network device identification.

4. The method according to claim 2, wherein one or more privacy disclosure levels are configured, each privacy disclosure level corresponds to a right for obtaining the location description information, and the higher the privacy disclosure level is, the more detailed the obtained location description information is; and the privacy disclosure levels are assigned to individual calling parties respectively; and
the method further comprises: obtaining the location description information of the roaming area of the called subscriber at a corresponding right according to the privacy disclosure level of the calling party, and sending the location description information to the calling party.

5. The method according to any one of claims 2 to 4, wherein the location description information includes at least one of country, province/state, city or time zone.

6. The method according to claim 2, wherein the obtaining the roaming state information of the called subscriber and prompting the calling party further comprises:
determining a local time of the roaming area of the called subscriber, and disposing the local time in the roaming state information to send the roaming state information to the calling party.

7. The method according to claim 6, wherein the determining the local time of the roaming area of the called subscriber comprises: obtaining the local time of the roaming area from a network device in the roaming area of the called subscriber.

8. The method according to claim 6, wherein a standard time difference and/or time zone corresponding to the network device or a location area is recorded by the network side; and
the determining the local time of the roaming area of the called subscriber comprises:
obtaining a standard time difference and/or time zone of a network device or a location area in the roaming area of the called subscriber, a standard time difference and/or time zone of a home area of the called subscriber, and a local time of the home area of the called subscriber, and
calculating out the local time of the roaming area of the called subscriber.

9. The method according to claim 3, 7 or 8, wherein the network device is a mobile switching center or a visitor location register.

10. The method according to claim 6, wherein one or more call barring time periods and prompt information with respect to each call barring time periods are specified by the called subscriber; and
the method further comprises: determining a corresponding call barring time period according to the local time of the roaming area of the called subscriber, and disposing the prompt information corresponding to the call barring time period in the roaming state information to send the roaming state information to the calling party.

11. The method according to claim 10, wherein the method further comprises: terminating, by the network side, the call when the network side determines that the local time of the roaming area of the called subscriber is within the specified call barring time period.

12. The method according to claim 1, wherein the method further comprises: after obtaining by the network side the roaming state information of the called subscriber, terminating or proceeding with, by the network side, the call according to the roaming state information.

13. The method according to claim 1, wherein the method further comprises:
determining, by the network side, whether an instruction is received from the calling party by the network side for canceling the call; terminating the call if the instruction is received for canceling the call; otherwise, proceeding with the call.

14. A system for prompting a roaming state of a called subscriber, comprising a gateway mobile switching center connected to subscribers, wherein the system further comprises: a roaming identifying device adapted to store roaming state information of a called subscriber; and
the roaming identifying device is further adapted to, determine a current state of the called subscriber when the gateway mobile switching center receives a call request, and to obtain the roaming state information of the called subscriber and prompt a calling party when it is determined that the called subscriber is in the roaming state.

15. The system according to claim 14, wherein the roaming identifying device comprises:
a subscriber database adapted to store subscriber home area attributes and subscriber privacy management information;
a roaming location information database adapted to store location description information of roaming areas of the called subscriber; and
a roaming information server connected to the subscriber database, the roaming location database and the gateway mobile switching center, and adapted to obtain the roaming state information of the called subscriber through searching the subscriber database and the roaming location database and provide the roaming state information to the gateway mobile switching center.

16. The system according to claim 14, wherein the roaming identifying device comprises:
a subscriber database adapted to store subscriber home area attributes and subscriber privacy management information;
a roaming location information database adapted to store location description information of roaming areas of the called subscriber; and
a service control point storing a roaming prompting service logic for the called subscriber, adapted to control the gateway mobile switching center when a roaming prompting service is triggered and performed in the gateway mobile switching center and obtain the roaming state information of the called subscriber through searching the subscriber database and the roaming location database and provide the roaming state information to the gateway mobile switching center.
